Europäisches Patentamt

European Patent Office

Office européen des brevets

(19)

(11) Veröffentlichungsnummer: **0 106 118**
**B1**

# (12) EUROPÄISCHE PATENTSCHRIFT

(45) Veröffentlichungstag der Patentschrift:
**11.06.86**

(21) Anmeldenummer: **83108819.0**

(22) Anmeldetag: **07.09.83**

(51) Int. Cl.⁴: **C 25 C 1/12**, C 22 B 30/04,
B 01 D 11/04

(54) Verfahren zum Abtrennen von Arsen aus einem Kupferelektrolyten.

(30) Priorität: 19.10.82 AT 3841/82
20.07.83 AT 2656/83

(43) Veröffentlichungstag der Anmeldung:
**25.04.84 Patentblatt 84/17**

(45) Bekanntmachung des Hinweises auf die Patenterteilung:
**11.06.86 Patentblatt 86/24**

(84) Benannte Vertragsstaaten:
**BE DE GB SE**

(56) Entgegenhaltungen:
**AT - B - 325 413
DE - B - 2 603 874
GB - A - 1 551 023**

(73) Patentinhaber: **Austria Metall Aktiengesellschaft,
A-5282 Braunau am Inn (AT)**

(72) Erfinder: **Marr, Rolf, Dr., Prof. Dipl.-Ing., Neue Welt
Höhe 33, A-8042 Graz (AT)**
Erfinder: **Bart, Hans-Jörg, Dr., Dipl.-Ing.,
Papiermühlgasse 38, A-8020 Graz (AT)**
Erfinder: **Wachter, Reinhard, Dipl.-Ing.,
Korösistrasse 170, A-8010 Graz (AT)**

(74) Vertreter: **Hain, Leonhard, Dipl.-Ing., Tal 18/IV,
D-8000 München 2 (DE)**

## Beschreibung

Die Erfindung betrifft ein Verfahren zur hydrometallurgischen Reinigung eines Kupferelektrolyten, der Arsen als Verunreinigung enthält. Bei hohen Arsengehalten (z.B. 8 g/l As) im Elektrolyten scheidet sich bei der Kupferelektrolyse mit inerten Bleianoden Arsen ab. Außerdem tritt dabei Arsinbildung auf, womit eine große Umweltbelastung verbunden ist. Andere Verfahren, wo das Arsen nach der Kupfer- und Nickelabscheidung durch Niederschlagsbildung von der verbleibenden Schwefelsäure abgetrennt wird, haben den erwähnten Nachteil, daß es bei der Kupferelektrolyse bei hohen Arsengehalten zu Arsenabscheidung kommt, beziehungsweise daß dabei giftige Arsingase entstehen (s. Ullmanns Encyklopädie der technischen Chemie, 3. Auflage, Urban & Schwarzenberg, München, Berlin, 1961, S. 213 und 197).

Im Vergleich zu bekannten Verfahren, wie z.B. GB-PS Nr. 1551023,zeigt das vorliegende Verfahren enorme Vorteile. Ein Vergleich des Extraktionsmittels Tributylphosphat (TBP) und Trioctylphosphinoxid (TOPO) wird in Tab. 1 gezeigt.

**Tab. 1:**
Org. Extrahierphase % Arsenextraktion mit
50 GewichtsDrozent TBP 4,5
50 Gewichtsprozent TOPO 68

Es wurden dazu die Extraktionsmittel in einem Aromaten, z.B. der registrierten Marke Shellsol AB, gelöst und mit einem. gleichen Volumen einer wäßrigen Lösung von 28,3 g/l Kupfer, 187,2 g/l Schwefelsäure, 18 g/l Nickel, 2,3 g/l Arsen, 0,13 g/l Eisen, 0,2 g/l Kalziuü, 0,03 g/l Magnesium, 0,9 g/l Natrium sowie 0,033 g/l Chlorid bei 25° C ins Gleichgewicht gebracht. Die Extraktionswirkuno unterscheidet sich dabei etwa um eine 10-er Potenz. Der Unterschied bei der Verwendung von Kerosin als Lösunqsmittel ist minimal und bewegt sich im 0,1 %-Bereich im Vergleich mit aromatischen Lösungsmitteln.

Die Verwendung von TOPO als Extraktionsmittel erlaubt enorme Einsparungen beim Bau von Arsenextraktionsanlaqen. Es werden bei einer aeringeren Stufenzahl die Apparateanzahl und bei einem qeringeren Bedarf an organischem Medium die Apparategrößen verringert.

Mit dem vorliegenden Verfahren ist es möglich, einen arsenfreien Kupferelektrolyten herzustellen, der dann in idealer Weise zu anschließender Kupfer- bzw. Nickelgewinnung geeignet ist.

Zur Lösung dieser Aufgabe wird als Extraktionsmittel Trioctylphosphinoxid in einer Menge von 0,1 bis 2,6 mol/kg in einem organischen Lösungsmittel verwendet.

Diese Organophosphorverbindung wird mit einem inerten organischen Lösungs- oder Verdünnungsmittel als Extrahierphase eingesetzt. Das inerte Verdünnungsmittel muß dabei wasserunmischbar sein, mußdas Extraktionsmittel lösen und darf die Arsenextraktion nicht behindern. Geeignet sind aromatische, aliphatische und halogenierte Kohlenwasserstoffe und Erdölderivate, z.B. Toluol, Tetrachlorkohlenstoff und insbesondere Kerosin.

Die arsenhaltige wäßrige Lösung wird mit in der Flüssig-Flüssig-Extraktion bekannten Arbeitsweisen mit der organischen Extrahierlösuno in Kontakt gebracht. Kontinuierliche Gegenstrommethoden an Mischer-Abscheidern oder Kolonnen werden bevorzugt. Die Temperatur, bei der die Extraktion ausgeführt wird, ist zweckmäßig niedrig und liegt bei ca. 25° C. Die Endkonzentration der wäßrigen Phase wird durch die Anzahl der Mischer-Abscheiderstufen oder durch die Kolonnenhöhe bestimmt. Das Volumenverhältnis von organischer zu wäßriger Phase kann in weiten Grenzen variiert werden. Es kann vom Fachmann leicht bestimmt werden und hängt von der Zusammensetzung der organischen Extrahierlösung und vom Arsengehalt im Kupferelektrolyten ab.

Nachdem das Arsen in die organische Phase extrahiert wurde und die wäßrige und organische Phase getrennt worden sind, wird die organische Extraktionsphase einem weiteren Flüssio-Flüssiq-Kontakt zugeführt. Dabei wird die organische Extraktionsphase mit einer geeigneten Abstreiflösung, die eine niedrig konzentrierte Salzund/oder Mineralsäurelösung ist (z.B. 0,5 mol/l Salz), bei erhöhter Temperatur (z.B. 65° C) von Arsen befreit. Aus dieser Lösung kann dann Arsen nach bekannten Methoden abgetrennt werden.

### Beispiel 1

80 Gewichtsprozent TOPO in p-Xylol wird mit einem schwefelsauren Kupferelektrolyten mit 2,3 g/l Arsen in drei Mischer-Abscheidern im Gegenstrom kontaktiert. Das Phasenverhältnis von organischer zu wäßriger Phase ist gleich eins. Es erfolgt eine Abreicherung des Arsens auf 0,3 g/l, wobei der Arsengehalt in der organischen Phase 2,1 g/l beträgt.

Die organische Phase wird nach beendeter Extraktion auf die Temperatur von 65° C gebracht und mit einer Lösung von 0,5 mol/l Na$_2$SO$_4$, die weiters noch 10 % H$_2$SO$_4$ enthält,kontaktiert, wobei die Abstreiflösung ebenfalls erfolgt in einem einstufigen Mischer-Abscheider, wobei die organische Phase auf einen Gehalt von 0,1 g/l Arsen abgereichert wird.

Das aus dem Abscheider kommende organische Medium kann nach einer Abkühlung auf 25° C wieder zur Extraktion eingesetzt werden.

In der anfallenden Abstreiflösunq kann Arsen nach bekannten Methoden, z.B. H$_2$S-Fällung, gewonnen werden. Die Abstreiflösung wird dabei im Kreis geführt und bedarf keiner Ergänzung, außer den mit der Zeit auftretenden Verdunstungsverlusten.

### Beispiel 2

2,07 mol/kg TOPO in Shellsol T, einer registrierten aliphatischen Verbindung, werden im Gegenstrom in einer SHE-Extraktionskolonne (A-PS 4568/8) mit einem Kupferelektrolyten, der 2,35 g/l Arsen enthält, kontaktiert. Die aktive Kolonnenhöhe beträgt 3 Meter. Das Phasenverhältnis organisch zu wäßrig ist 1:1,5. Der Raffinatstrom, der die Kolonne verläßt, enthält noch 0,17 g/l Arsen. Die Verweilzeit der dispersen organischen Tropfen in der Kolonne beträgt 12 min. Die Extraktion wird bei Zimmertemperatur durchgeführt.

Siehe hierzu auch anliegendes Schaubild.

**Patentsprüche**

1. Verfahren zum Abtrennen von Arsen aus einem Kupferelektrolyten bei der elektrolytischen Kupferabscheidung, durch Flüssig-Flüssig-Extraktion mit einem organischen Medium, wobei die arsenhaltige organische phase nach der Extraktion zwecks Abstreifens des Arsens mit einer geeigneten wäßrigen Lösung in Kontakt gebracht wird, dadurch gekennzeichnet, daß das organische Medium mit Trioctylphosphinoxid in einer Menge von 0,1 bis 2,6 mol/kg in einem organischen Lösungsmittel verwendet wird.

2. Verfahren nach Anspruch 1, dadurch gekennzeichnet, daß als organische Lösungsmittel aromatische oder aliphatische oder chlorierte Kohlenwasserstoffe oder ein Gemisch davon eingesetzt werden.

3. Verfahren nach Anspruch 2, dadurch gekennzeichnet, daß als Lösungsmittel ein Aromat verwendet wird.

4. Verfahren nach Anspruch 1, dadurch gekennzeichnet, daß als Abstreiflösung eine niedrig konzentrierte Salz- und/oder Mineralsäurelösung mit einer Temperatur von etwa 65° C verwendet wird.

5. Verfahren nach Anspruch 1, dadurch gekennzeichnet, daß bei der Extraktionsoperation ein organisches Medium mit einer Temperatur von ca. 25° C und bei der Abstreifoperation eines mit ca. 65° C verwendet wird.

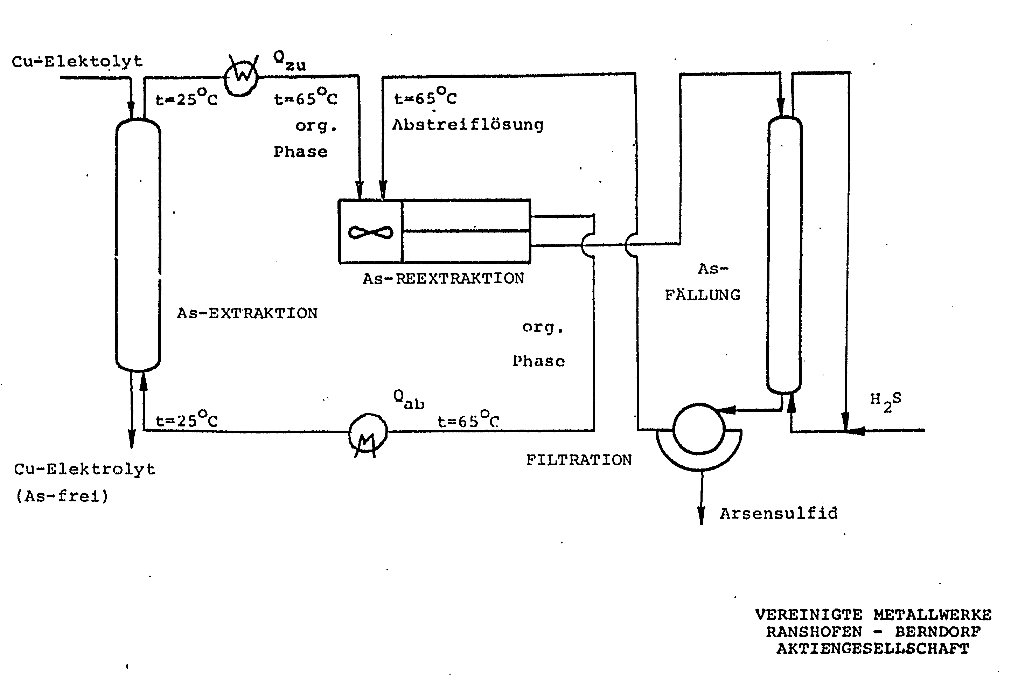

**Claims**

1. Process for removing arsenic from a copper-bearing electrolyte at the electrolytic deposition of copper by liquid-liquid extraction with an organic medium, the arsenic-containing organic phase being brought into contact with a suitable aqueous solution for stripping the arsenic after the extraction, characterized in that the organic medium is employed together with trioctylphosphineoxide in a quantity of 0.1 to 2.6 mol/kg in an organic solvent.

2. Process according to claim 1, characterized in that aromatic or aliphatic or chlorinated hydrocarbons or a mixture thereof are employed as organic solvents.

3. Process according to claim 2, characterized in that the solvent is an aromatic compound.

4. Process according to claim 1, characterized in that the stripping solution is a low concentrated solution of hydrochloric acid and/or a solution of mineral acid being employed at a temperature of approximately 65 °C.

5. Process according to claim 1, characterized in that during the extraction phase an organic medium with a temperature of approximately 25°C and during the stripping phase an organic medium with a temperature of approximately 65°C are employed.

**Revendications**

1. Procédé d'élimination d'arsenic d'une solution électrolytique à base de cuivre destinée à la production cuivre par électrolyse, s'effectuant par extraction liquideliquide avec un agent d'extraction organique, la phase organique chargée d'arsenic étant, après l'extraction, mise en contact avec une solution aqueuse appropriée pour en éliminer l'arsenic, caractérisé en ce que le composé organique faisant office d'agent d'extraction est l'oxyde trioctylphosphinique dissous dans un dissolvant organique à raison de 0,1 à 2,6 moles/kg.

2. Procédé selon la revendication 1, caractérisé par l'emploi d'hydrocarbures aromatiques, aliphatiques ou chlorés ou d'un mélange de tels composés en guise de dissolvants organiques.

3. Procédé selon la revendication 2, caractérisé en ce que le dissolvant mis en oeuvre est un composé aromatique.

4. Procédé selon la revendication 1, caractérisé en ce que la solution d'élimination d'arsenic mise en oeuvre est une solution d'un acide chlorhydrique et/ou d'un acide minéral, employée à une température d'environ 65°C.

5. Procédé selon la revendication 1, caractérisé en ce qu'au stade d'extraction et au stade d'élimination de l'arsenic s'emploie un agent organique à une température s'élevant respectivement à environ 25°C et à environ 65°C.

Cu-Elektolyt

$Q_{zu}$

t=25°C    t=65°C    t=65°C

org.    Abstreiflösung

Phase

As-REEXTRAKTION

As-EXTRAKTION    As-FÄLLUNG

org.

Phase

$Q_{ab}$

t=25°C    t=65°C    $H_2S$

Cu-Elektrolyt    FILTRATION

(As-frei)

Arsensulfid

VEREINIGTE METALLWERKE
RANSHOFEN - BERNDORF
AKTIENGESELLSCHAFT